(19) Europäisches Patentamt
European Patent Office
Office européen des brevets

(11) **EP 3 663 939 A1**

(12) **EUROPÄISCHE PATENTANMELDUNG**

(43) Veröffentlichungstag:
**10.06.2020 Patentblatt 2020/24**

(21) Anmeldenummer: **18210721.9**

(22) Anmeldetag: **06.12.2018**

(51) Int Cl.:
*G06F 17/22* (2006.01)  *G06F 17/27* (2006.01)
*G06F 16/901* (2019.01)  *G05B 19/05* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder: **Schall, Daniel**
**1220 Wien (AT)**

(74) Vertreter: **Maier, Daniel Oliver**
**Siemens AG**
**Postfach 22 16 34**
**80506 München (DE)**

(54) **VERFAHREN ZUR BESTIMMUNG EINES DIVERSITÄTS-INDIKATORS EINER UNIVERSELLEN VORRICHTUNG ZUR STEUERUNG EINER TECHNISCHEN ANLAGE**

(57) Verfahren zur Bestimmung eines Diversitäts-Indikators (101) einer universellen Vorrichtung (100) zur Steuerung einer technischen Anlage (10-12), wobei eine Vielzahl an Programmcodes (102) für verschiedene Moden der universellen Vorrichtung (100) vorgesehen sind, wobei ein Modus mittels einem Parameter (103) auswählbar ist, und jeweils Eigenschaften (120-134) für einzelne Programmcodes (110-114) aus der Vielzahl an Programmcodes (102) bestimmt werden, und für die Eigenschaften (120-134) paarweise Ähnlichkeiten bestimmt werden, und aus den paarweisen Ähnlichkeiten ein Modell, welches einen gerichteten Graphen aufweist, erzeugt wird, und der Diversitäts-Indikator (101) aus dem Modell bestimmt wird.

## FIG 1

EP 3 663 939 A1

**Beschreibung**

Die Erfindung betrifft ein Verfahren, eine Vorrichtung und ein System zur Bestimmung eines Diversitäts-Indikators einer universellen Vorrichtung zur Steuerung einer technischen Anlage.

In der Industrie besteht das Bedürfnis einer möglichst breiten gemeinsamen Nutzung von Geräten. Dennoch kann es erforderlich sein, einzelne Komponenten von Systemen an spezifische Anwendungen anzupassen beziehungsweise jeweils spezifische Komponenten zu verwenden. Dabei sollen diese spezifischen Komponenten trotzdem von generischen Vorrichtungen angesteuert werden können, beziehungsweise von generischen Vorrichtungen ausgelesen werden können. Dadurch können generische Vorrichtungen mehrere Programmcodes umfassen, welche an spezifische Systemkomponenten angepasst sein können.

Um sicherzustellen, ob die Vorrichtung entsprechende Programmcodes zur Steuerung verschiedener Komponenten, Geräte oder technischen Anlagen beinhaltet, kann eine sogenannte Diversität bestimmt werden.

Im Zusammenhang mit der Erfindung wird unter der Diversität die Breite an Unterstützung für unterschiedliche Komponenten, Geräte oder technischen Anlagen durch entsprechende, unterschiedliche Programmcodes verstanden.

Unter Programmcodes werden in diesem Zusammenhang beispielswiese Codesequenzen, Anwendungsprogramme oder Apps verstanden, welche in Form von Source-Code oder kompilierter, lauffähiger Form vorliegen können. Die Programmcodes können von beschreibenden, zusätzlichen Daten ergänzt und begleitet sein.

Es ist Aufgabe der Erfindung ein Verfahren bereitzustellen, welches die Diversität von Programmcodes einer universellen Vorrichtung zur Steuerung einer technischen Anlage bestimmt.

Die Aufgabe wird durch ein Verfahren eingangs genannter Art gelöst, indem eine Vielzahl an Programmcodes für jeweils verschiedene Moden der universellen Vorrichtung vorgesehen sind, wobei ein Modus mittels einem Parameter auswählbar ist, und jeweils Eigenschaften für einzelne Programmcodes aus der Vielzahl an Programmcodes bestimmt werden, und für die Eigenschaften paarweise Ähnlichkeiten bestimmt werden, und aus den paarweisen Ähnlichkeiten ein Modell, welches einen gerichteten Graphen aufweist, erzeugt wird, und der Diversitäts-Indikator aus dem Modell bestimmt wird.

Dadurch wird eine universell einsetzbare Vorrichtung geschaffen, welche mehrere Moden für die Ansteuerung verschiedener technischer Anlagen unterstützt, wobei mittels des Diversitäts-Indikators eine Analyse über die Verschiedenheit der einzelnen Moden möglich ist.

Die Verschiedenheit einzelner unterstützter Moden ist eine wichtige Kennzahl über den Grad des flexiblen Einsatzes beziehungsweise Universalität einer Vorrichtung.

Mit anderen Worten wird ein Indikator für die Universalität einer Multifunktionsvorrichtung bestimmt, welcher den Umfang unterschiedlicher Teilfunktionen mit unterschiedlichen Eigenschaften oder Funktionen abbildet. Die Multifunktionsvorrichtung kann dabei eine verbundene, spezifische technischen Anlage mit einer jeweiligen, spezifischen Teilfunktion ansteuern. Mit der Multifunktionsvorrichtung lassen sich Hochsprachenfunktionen integrieren sowie eigenständige Applikationen einfach erstellen und wiederverwenden. Die Multifunktionsvorrichtung kann als multifunktionale Plattform verstanden werden, welche beispielsweise eine typische Steuerung mit bisher auf einem PC ausgelagerten Aufgaben kombiniert.

Somit kann die erfindungsgemäße generische Vorrichtung auf eine einfache und kostengünstige Weise bestimmt werden, wie flexibel die Vorrichtung für unterschiedliche technische Anlagen angepasst werden kann oder inwieweit jeweils eine optimale Funktionalität sowie eine optimale Leistung bereitgestellt werden kann.

Die Vielzahl an Programmcodes kann zwei, drei, vier, fünf, zehn, hundert, tausend, zehntausend und mehr Programmcodes umfassen.

Der Modus kann beispielsweise ein Betriebsmodus oder eine spezifische Konfiguration der Vorrichtung sein.

Der Parameter kann beispielsweise ein Parameter zur Auswahl eines Betriebsmodus oder einer spezifischen Konfiguration der Vorrichtung sein.

Die Vielzahl an Programmcodes ist in der Vorrichtung gespeichert, wobei der Speicher auch ein verteilter Speicher sein kann. Mit anderen Worten kann die Vielzahl an Programmcodes in einer Cloud-Platform, wie einem App-Store gespeichert sein. Bei Anwendung kann mittels des Parameters ein Programmcode aus der Vielzahl an Programmcodes ausgewählt werden und in die Vorrichtung geladen werden, dort gespeichert werden und ausgeführt werden.

Das Verfahren kann auch zur Regelung einer technischen Anlage verwendet werden, beispielsweise für ein Regelsystem einer technischen Anlage, sein, also eine Kombination aus Steuer- und Sensorvorrichtung, wobei die Vielzahl an Programmcodes unterschiedliche Regelverfahren, wie digitale oder analoge Verfahren, beispielsweise P-, I- oder D-Regelverfahren aufweisen, oder auch mathematische Modelle, welche beispielsweise auf maschinellem Lernen beziehungsweise künstlicher Intelligenz beruhen, oder auch Kombinationen daraus, umfassen kann. Zu diesem Zweck kann das Verfahren einen Regeleingangs-Parameter berücksichtigen, welcher dem Regelsystem eine Regelgröße von der Regelstrecke, welche durch eine Störgröße unerwünscht beeinflusst wird, rückführt.

Es ist günstig, wenn die Eigenschaften einer Applikation mittels dem Latent Dirichlet Allocation (LDA)-Verfahren bestimmt werden. Vom Grundprinzip ist LDA ein probabilistisches Topic Model. Hier wird von beobachtbaren Variablen - den Wörtern und Dokumenten - auf die nicht beobachtbare, latente Variable der Topics geschlossen.

Dadurch wird erreicht, dass die Eigenschaften einer Applikation nicht nur statisch, sondern dynamisch, beispielsweise mittels "text mining" und/oder "topic modeling" Techniken bestimmt werden.

Unter text mining wird ein Bündel von Algorithmus-basierten Analyseverfahren zur Entdeckung von Bedeutungsstrukturen aus un- oder schwachstrukturierten Textdaten verstanden. Mit statistischen und linguistischen Mitteln erschließt Text-Mining-Software aus Texten Strukturen, die die Benutzer in die Lage versetzen sollen, Kerninformationen der verarbeiteten Texte schnell zu erkennen. Im Optimalfall liefern Text-Mining-Systeme Informationen, von denen die Benutzer zuvor nicht wissen, ob und dass sie in den verarbeiteten Texten enthalten sind. Bei zielgerichteter Anwendung sind Werkzeuge des Text Mining außerdem in der Lage, Hypothesen zu generieren, diese zu überprüfen und schrittweise zu verfeinern.

Unter einem topic model wird beim maschinellen Lernen und bei der Verarbeitung natürlicher Sprachen eine Art eines statistischen Modells zum Erkennen abstrakter "Themen", die in einer Sammlung von Dokumenten vorkommen, verstanden. Themenmodellierung ist ein häufig verwendetes Text-Mining-Tool zum Erkennen verborgener semantischer Strukturen in einem Textkörper. Die durch Themenmodellierungstechniken erzeugten "Themen" sind Cluster ähnlicher Wörter. Ein Themenmodell erfasst diese Intuition in einem mathematischen Rahmen, der es ermöglicht, eine Reihe von Dokumenten zu untersuchen und anhand der Statistik der Wörter in jedem Dokument herauszufinden, was die Themen sein könnten und wie die Themenverteilung jedes Dokuments aussieht.

Themenmodelle werden auch als probabilistische Themenmodelle bezeichnet, die sich auf statistische Algorithmen beziehen, um die latenten semantischen Strukturen eines umfangreichen Textkörpers zu entdecken. Themenmodelle können helfen, zu organisieren und Einblicke zu bieten, um große Sammlungen unstrukturierter Textkörper zu verstehen.

Das Latent Dirichlet Allocation-Verfahren (LDA) basiert auf statistischen Modellen zum Erkennen von Themen, die in einer Sammlung von nicht-gekennzeichnetem Text vorkommen. Ein Thema weist ein Cluster bzw. eine Gruppe von Worten auf, die häufig gemeinsam vorkommen.

In einer Weitertbildung der Erfindung ist es vorgesehen, dass die paarweisen Ähnlichkeiten mittels einer Ähnlichkeitsmatrix bestimmt werden.

Dadurch können die Ähnlichkeiten auf eine einfache Weise automatisch weiterverarbeitet werden In einer Weitertbildung der Erfindung ist es vorgesehen, dass eine jeweilige Ähnlichkeit im Modell nur dann berücksichtigt wird, wenn die jeweilige Ähnlichkeit zwei unterschiedlichen Eigenschaften betrifft und einen vordefinierten Grenzwert, welcher bevorzugt größer als Null ist, überschreitet.

Dadurch wird erreicht, dass auf eine einfache Weise ein gerichteter Ähnlichkeits-Graph erzeugt werden kann.

Der gerichtete Graph weist Knoten auf, welche die Eigenschaften von Programmcodes beschreiben, sowie Kanten, welche die paarweise Ähnlichkeit der Eigenschaften darstellen.

In einer Weitertbildung der Erfindung ist es vorgesehen, dass der Diversitäts-Indikator durch den Zusammenhang

$$DI(M) = 1 - \frac{\sum_{ij}\frac{1}{d_{ij}}}{N(N-1)}$$

bestimmt wird, wobei

*DI(M)*    der Diversitäts-Indikator für einen Marktplatz *M* in Form der Vielzahl an Programmcodes der universellen Vorrichtung ist,

*N*    die Anzahl der Programmcodes der universellen Vorrichtung ist,

*d$_{ij}$*    der kürzeste Pfad in einem gerichteten Graphen zwischen einem ersten Programmcode i und einem zweiten Programmcode j aus der Vielzahl an Programmcodes ist.

Unter einem Markplatz wird in diesem Zusammenhang beispielswiese ein App-Store, ein Entwicklerforum wie github.com oder einfach eine Zusammenstellung verschiedener Programmcodes verstanden. Die Zusammenstellung kann in einem lokalen Speicher oder einem verteilten Speicher der Universal-Vorrichtung gespeichert sein.

Die Erfindung betrifft auch eine Vorrichtung eingangs genannter Art, wobei von der Vorrichtung eine Vielzahl an Programmcodes für jeweils verschiedene Moden gespeichert sind und das Verfahren nach einem der vorhergehenden Ansprüche ausgeführt wird, wodurch der Diversitäts-Indikator bestimmt wird.

Es ist günstig, wenn die technische Anlage eine industrielle Produktionsanlage ist.

In einer Weitertbildung der Erfindung ist es vorgesehen, dass die Vorrichtung eine Steuervorrichtung zur Steuerung des Betriebs der technischen Anlage ist, und die Vorrichtung dazu eingerichtet ist, Steuerinstruktionen mittels einem, durch einen Parameter ausgewählten Programmcode aus der Vielzahl an Programmcodes zu erzeugen und dadurch die technische Anlage zu steuern.

Dadurch wird erreicht, dass der Diversitäts-Indikator für eine flexibel und universell nutzbare Steuervorrichtung bestimmt wird, wodurch eine effiziente Entwicklung beziehungsweise Konfiguration der Vorrichtung möglich ist.

In einer Weitertbildung der Erfindung ist es vorgesehen, dass die Vorrichtung eine Erfassungsvorrichtung zur Erfassung von Betriebsparametern der technischen Anlage ist, und die Vorrichtung dazu eingerichtet ist, Steuerinstruktionen mittels einem, durch einen Parameter ausgewählten Programmcode aus der Vielzahl an Programmcodes zu erzeugen und dadurch Daten der technischen Anlage zu erfassen.

Dadurch wird erreicht, dass der Diversitäts-Indikator für eine flexibel und universell nutzbare Erfassungsvorrichtung bestimmt wird, wodurch eine effiziente Entwicklung beziehungsweise Konfiguration der Vorrichtung möglich ist.

Die Erfindung betrifft auch ein System, umfassend eine mit einer Steuervorrichtung zur Steuerung des Betriebs der technischen Anlage, sowie eine Erfassungsvorrichtung zur Erfassung von Betriebsparametern der technischen Anlage aufweist.

Die Vorrichtung kann beispielsweise ein Regelsystem sein, also eine Kombination aus Steuer- und Sensorvorrichtung, wobei die Vielzahl an Programmcodes unterschiedliche Regelverfahren, wie digitale oder analoge Verfahren, beispielsweise P-, I- oder D-Regelverfahren aufweisen, oder auch mathematische Modelle, welche beispielsweise auf maschinellem Lernen beziehungsweise künstlicher Intelligenz beruhen, oder auch Kombinationen daraus, umfassen kann. Zu diesem Zweck kann die Vorrichtung zusätzlich einen Regeleingang aufweisen, welcher dem Regelsystem eine Regelgröße von der Regelstrecke, welche durch eine Störgröße unerwünscht beeinflusst wird, rückführt.

Dadurch wird erreicht, dass der Diversitäts-Indikator für eine flexibel und universell nutzbare, kombinierte Steuerungs- und Erfassungvorrichtung bestimmt wird, wodurch eine effiziente Entwicklung beziehungsweise Konfiguration der Vorrichtung möglich ist.

Die Erfindung wird nachfolgend anhand eines in den beigeschlossenen Zeichnungen dargestellten Ausführungsbeispiels näher erläutert. In den Zeichnungen zeigt:

Fig. 1 eine schematische Darstellung eines ersten Ausführungsbeispiels mit einer Steuerungsvorrichtung gemäß der Erfindung,

Fig. 2 eine schematische Darstellung eines zweiten Ausführungsbeispiels mit einer Erfassungsvorrichtung gemäß der Erfindung,

Fig. 3 eine Darstellung eines gerichteten Ähnlichkeitsgraphen,

Fig. 4 ein Ausführungsbeispiel für das erfindungsgemäße Verfahren,

Fig. 5 ein Beispiel für einen Programmcode zur Bestimmung einer paarweisen Ähnlichkeit,

Fig. 6 ein Beispiel für einen Programmcode zur Bestimmung eines Diversitäts-Indikators,

Fig. 7 eine Darstellung der Kantenanzahl bei der Bestimmung des Diversitäts-Index bei verschiedenen Schwellwerten,

Fig. 8 eine Darstellung des Diversitäts-Index bei verschiedenen Schwellwerten.

Die nachfolgenden Figuren zeigen Ausführungsformen der Erfindung, wobei weitere, nicht gezeigte Ausführungsformen der Erfindung beispielsweise auch durch Kombination einzelner Merkmale gebildet werden können.

Die Erfindung bezieht sich auf eine universelle Vorrichtung, welche je nach Konfiguration durch einen Parameter eine jeweils unterschiedliche technische Anlage ansteuern beziehungsweise auslesen kann, oder eine Kombination aus dem Ansteuern einer technischen Anlage und dem Auslesen einer technischen Anlage aufweisen kann.

Eine technische Anlage kann im Zusammenhang mit der Erfindung eine Komponente, ein Gerät oder eine technische Anlage sein.

Die Komponente kann ein Teil eines komplexen Systems sein, beispielsweise eine elektronisch steuerbare Ventilsteuerungseinheit, eine elektronisch steuerbare Spannungsversorgung, ein elektronischer Sensor oder ein elektrischer Schaltkontakt sein.

Ein Gerät kann beispielsweise eine elektrische Pumpe oder eine Leistungssteuerung eines elektrischen Motors sein.

Eine technische Anlage kann eine industrielle Produktionsanlage, wie beispielsweise eine Produktionsanlage für Halbleiter, eine Bestückungsanlage für Leiterplatten oder eine Anlage für chemische Prozessierung sein.

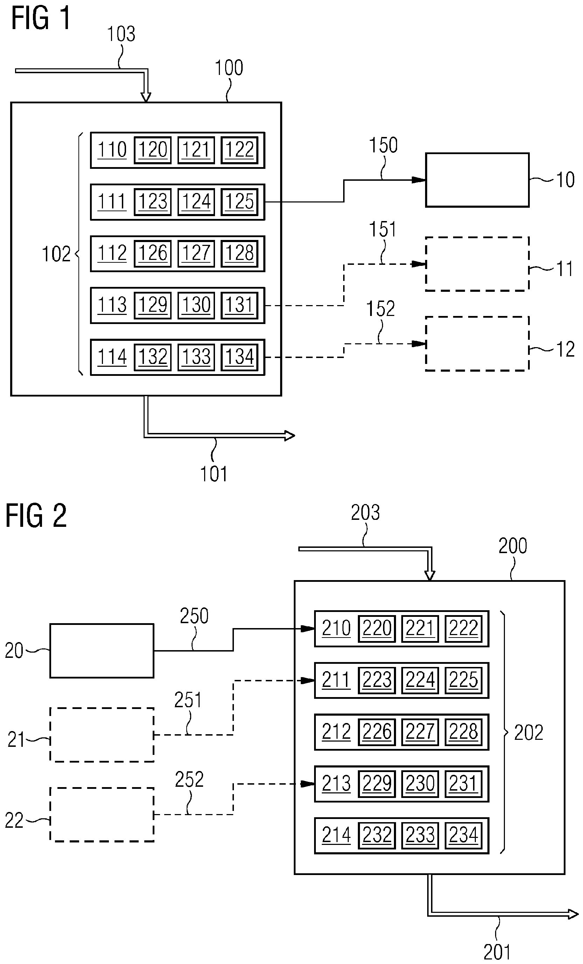

In **Fig. 1 und 2** sind schematisch Ausführungsbeispiele mit einer Vorrichtung 100, 200 gezeigt.

Als erstes Ausführungsbeispiel ist die Steuerungsvorrichtung 100 eine universelle Vorrichtung zur Steuerung einer technischen Anlage 10-12, welche dazu eingerichtet ist, einen Diversitäts-Indikator 101 zu bestimmen.

Das heißt, die universelle Vorrichtung 100 kann je nach Konfiguration durch einen Parameter 103 eine jeweils unterschiedliche technische Anlage 10-12 ansteuern.

In einem Speicher der Vorrichtung 100 sind eine Vielzahl an Programmcodes 102 für jeweils verschiedene Moden gespeichert.

Dabei sind die Vielzahl an Programmcodes 102 für verschiedene Moden der Vorrichtung 100 vorgesehen, wobei ein Modus mittels dem Parameter 103 auswählbar ist.

Die Vorrichtung 100 der **Fig. 1** ist eine Steuervorrichtung zur Steuerung des Betriebs der technischen Anlage 10-12.

Die Vorrichtung 100 ist dazu eingerichtet, Steuerinstruktionen 150-152 mittels einem, durch den Parameter 103 ausgewählten Programmcode aus der Vielzahl an Programmcodes 102 zu erzeugen und dadurch die technischen Anlage 10-12 zu steuern.

Als zweites Ausführungsbeispiel ist die Steuerungsvorrichtung 200 eine universelle Vorrichtung 200 zur Erfassung von Parametern einer technischen Anlage 20-22, welche dazu eingerichtet ist, einen Diversitäts-Indikator 201 zu bestimmen.

Die Vorrichtung 200 der **Fig. 2** ist eine Erfassungsvorrichtung zur Erfassung von Parametern der technischen Anlage 20-22.

Die Erfassungsvorrichtung kann beispielsweise ein Spannungsmessgerät sein. Die Parameter können Betriebsparameter, beispielsweise Spannungs-Messwerte des Spannungsmessgeräts sein.

Die Vorrichtung 200 ist dazu eingerichtet, Steuerinstruktionen mittels einem, durch einen Parameter 203 ausgewählten Programmcode aus der Vielzahl an Programmcodes 202 zu erzeugen und dadurch Daten 250-252 der technischen Anlage 20-22 zu erfassen.

In den Figuren nicht gezeigt ist ein System, umfassend eine mit einer Steuervorrichtung zur Steuerung des Betriebs der technischen Anlage nach Fig. 1, sowie eine Erfassungsvorrichtung zur Erfassung von Betriebsparametern der technischen Anlage nach Fig. 2.

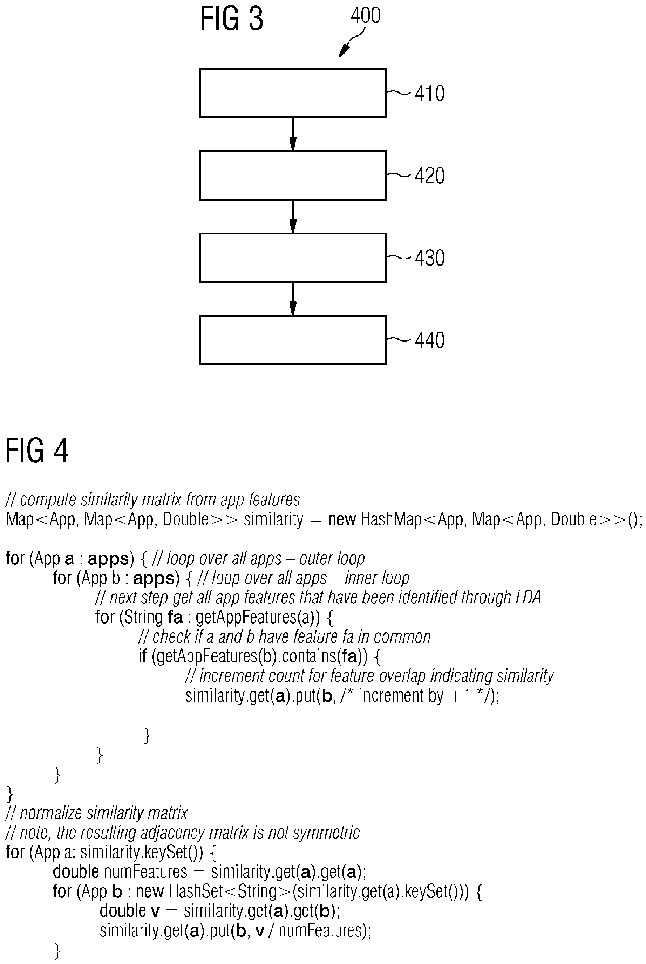

Die Vorrichtung 100, 200 führt ein Verfahren 400 aus, welches in **Fig. 3** dargestellt ist und in welchem der Diversitäts-Indikator 101, 201 bestimmt wird:

- Bestimmen 410 von jeweiligen Eigenschaften 120-134, 220-234 für einzelne Programmcodes 110-114, 210-214 aus der Vielzahl an Programmcodes.

- Ermitteln 420 von paarweise Ähnlichkeiten 301-324 für die Eigenschaften 120-134, 220-234.

- Erzeugen 430 eines Modells 300 aus den paarweisen Ähnlichkeiten 301-324, wobei das Modell 300 einen gerichteten Graphen aufweist.

- Ableiten 440 des Diversitäts-Indikators 101, 201 aus dem Modell 300.

Dabei ist es günstig, wenn die Eigenschaften 120-134, 220-234 mittels dem Latent Dirichlet Allocation-Verfahren (LDA) im Schritt 410 bestimmt werden.

Beispielsweise können Beschreibungen von Programmcodes oder Anwendungen hinsichtlich Energieeffizienz und erzeugender Industrie analysiert werden. Durch das LDA-Verfahren könnten Worte wie "KPI", "Verbrauch", "Leistung" und "Betrieb" in eine Gruppe zugeordnet werden, und "Nahrungsmittel", "Getränke" "chemisch" und "pharmazeutisch" in eine andere Gruppe zugeordnet werden. Anwendungsprogramme, die sich hauptsächlich mit Energieeffizienz befassen würden somit zum ersten Thema zugeordnet werden, da die meisten Worte in der Beschreibung die erste Gruppe betreffen.

In **Fig. 4** ist ein Beispiel für einen Programmcode zur Bestimmung einer paarweisen Ähnlichkeit gezeigt, wobei die paarweisen Ähnlichkeiten 301-324 mittels einer Ähnlichkeitsmatrix im Schritt 420 bestimmt werden.

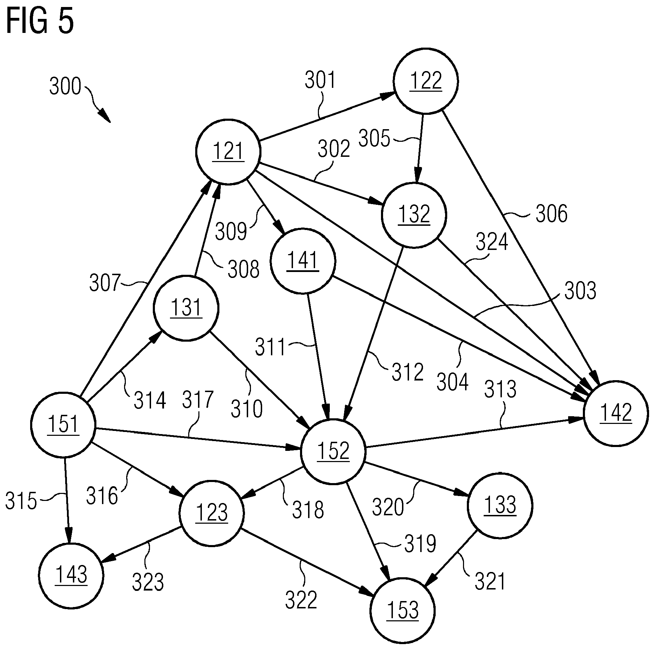

Aus der Ähnlichkeitsmatrix wird im Schritt 430 der gerichtete Ähnlichkeits-Graph in Form des Modells 300 nach **Fig. 5** für die Vorrichtung 100 erzeugt, welcher eine jeweilige Ähnlichkeit im Modell 300 nur dann berücksichtigt wird, wenn die jeweilige Ähnlichkeit 301-324 zwei unterschiedlichen Eigenschaften 120-134 betrifft und einen vordefinierten Grenzwert, welcher größer als Null ist, überschreitet.

Dabei wird der Diversitäts-Indikator 101 durch den Zusammenhang

$$DI(M) = 1 - \frac{\sum_{ij} \frac{1}{d_{ij}}}{N(N-1)}$$

bestimmt.

$DI(M)$ ist der Diversitäts-Indikator 101 für einen Marktplatz M in Form der Vielzahl an Programmcodes 102 der universellen Vorrichtung 100. $DI(M)$ liegt im Bereich [0...1], wobei Null keine Diversität bedeutet, das heißt kein Anwendungs-Programmcode weist die selben Merkmale oder Eigenschaften auf, und Eins für eine hohe Diversität steht, das heißt alle Anwendungs-Programmcodes weisen unterschiedliche Merkmale oder Eigenschaften auf.

N ist die Anzahl der Programmcodes der universellen Vorrichtung 100.

$d_{ij}$ ist der kürzeste Pfad zwischen einem ersten Programmcode i und einem zweiten Programmcode j aus der Vielzahl an Programmcodes 102.

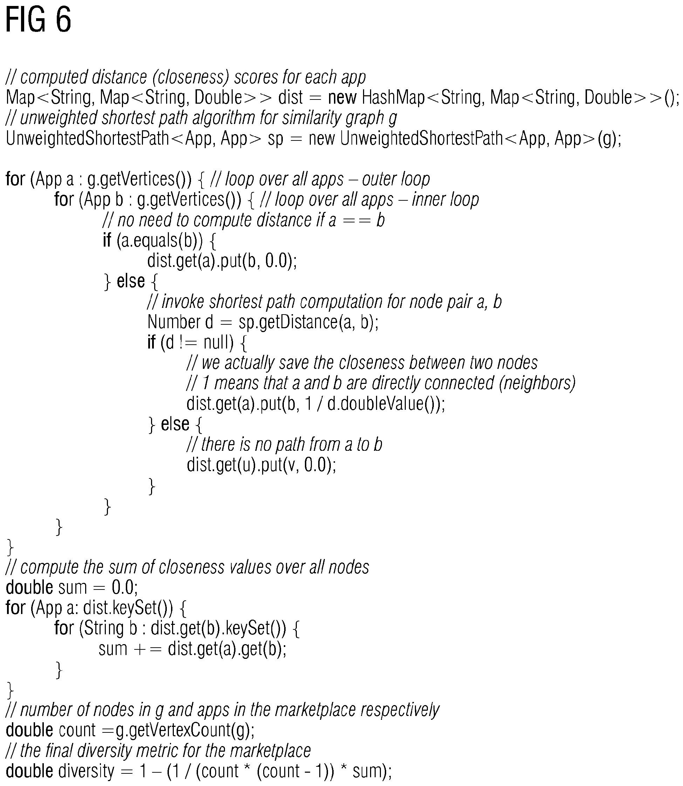

**Fig. 6** zeigt ein Beispiel für einen Programmcode zur Bestimmung des Diversitäts-Indikators 102.

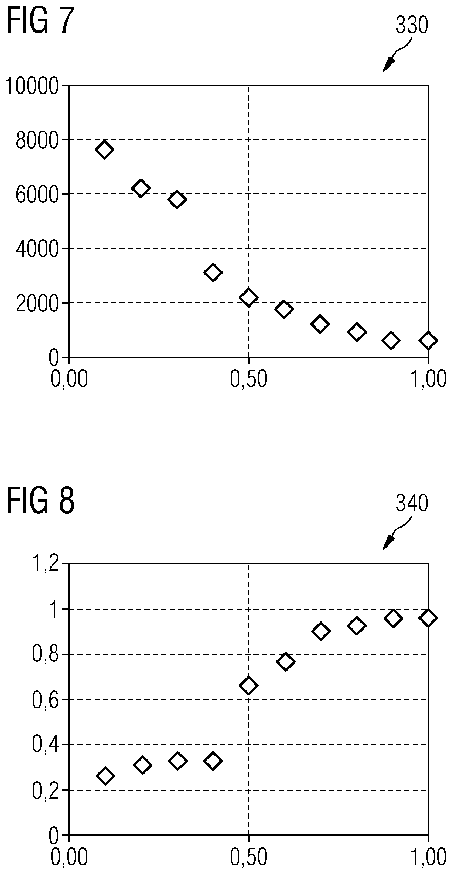

**Fig. 7** zeigt eine Darstellung der Kantenanzahl 330 bei der Bestimmung des Diversitäts-Index bei verschiedenen Schwellwerten. Für dieses Beispiel liegt ein Graph mit 126 Apps und etwa 8000 Kanten zugrunde.

Auf der X-Achse ist ein Schwellwert und auf der Y-Achse die Kantenanzahl 330 aufgetragen.

**Fig. 8** zeigt eine Darstellung des Diversitäts-Index 340, welcher dem Diversitäts-Indikator entspricht, bei verschiedenen Schwellwerten.

Auf der X-Achse ist wiederum der Schwellwert und auf der Y-Achse der Diversitäts-Index 340 aufgetragen.

In Fig. 7 ist der Wendepunkt bei einem Ähnlichkeitswert von 0,5 erreicht, was in Fig. 8 zu einem Diversitäts-Index 340 von 0,66 führt, was einer hohen Diversität hinsichtlich der Eigenschaften der verschiedenen Programmcodes entspricht.

**Bezugszeichenliste:**

| | |
|---|---|
| 100 | universelle Steuervorrichtung |
| 101, 201 | Diversitäts-Indikator |
| 102, 202 | Vielzahl an Programmcodes |
| 103, 203 | Betriebsmodus-Parameter |
| 10-12 | technischen Anlage, Steueranlage |
| 20-22 | technischen Anlage, Messanlage |
| 110-114 | Programmcodes für Steuervorrichtung |
| 120-134, 220-234 | Eigenschaften |
| 150-152 | Instruktionen, von Programmcode erzeugt |
| 200 | universelle Messvorrichtung |
| 250-252 | Messdaten von Messvorrichtung |
| 300 | Modell, gerichteter Graph |
| 301-324 | Ähnlichkeit |
| 330 | Anzahl an Kanten |
| 400 | Verfahren |
| 410 | Bestimmen von Eigenschaften |
| 420 | Ermitteln von paarweisen Ähnlichkeiten |
| 430 | Erzeugen eines Modells |
| 440 | Ableiten des Diversitäts-Indikators |

**Patentansprüche**

1. Verfahren zur Bestimmung eines Diversitäts-Indikators (101, 201) einer universellen Vorrichtung (100, 200) zur Steuerung einer technischen Anlage (10-12, 20-22), **dadurch gekennzeichnet, dass** eine Vielzahl an Programmcodes (102, 202) für verschiedene Moden der universellen Vorrichtung (100, 200) vorgesehen sind, wobei ein Modus mittels einem Parameter (103, 203) auswählbar ist, und jeweils Eigenschaften (120-134, 220-234) für einzelne Programmcodes (110-114, 210-214) aus der Vielzahl an Programmcodes (102, 202) bestimmt werden, und für die Eigenschaften (120-134, 220-234) paarweise Ähnlichkeiten (301-324) bestimmt werden, und aus den paarweisen Ähnlichkeiten (301-324) ein Modell (300), welches einen gerichteten Graphen aufweist, erzeugt wird, und der Diversitäts-Indikator (101, 201) aus dem Modell (300) bestimmt wird.

2. Verfahren nach dem vorhergehenden Anspruch, wobei die Eigenschaften (120-134, 220-234) mittels dem Latent Dirichlet Allocation-Verfahren bestimmt werden.

3. Verfahren nach einem der vorhergehenden Ansprüche, wobei die paarweisen Ähnlichkeiten (301-324) mittels einer Ähnlichkeitsmatrix bestimmt werden.

4. Verfahren nach einem der vorhergehenden Ansprüche, wobei der Diversitäts-Indikator (101, 201) durch den Zusammenhang

$$DI(M) = 1 - \frac{\sum_{ij}\frac{1}{d_{ij}}}{N(N-1)}$$

bestimmt wird, wobei

*DI(M)* der Diversitäts-Indikator (101, 201) für einen Marktplatz *M* in Form der Vielzahl an Programmcodes (102, 202) der universellen Vorrichtung (100, 200) ist,
*N* die Anzahl der Programmcodes der universellen Vorrichtung (100, 200) ist,
$d_{ij}$ der kürzeste Pfad zwischen einem ersten Programmcode i und einem zweiten Programmcode j aus der Vielzahl an Programmcodes (102, 202) ist.

5. Verfahren nach einem der vorhergehenden Ansprüche, wobei eine jeweilige Ähnlichkeit im Modell (300) nur dann berücksichtigt wird, wenn die jeweilige Ähnlichkeit zwei unterschiedlichen Eigenschaften (120-134, 220-234) betrifft und einen vordefinierten Grenzwert überschreitet.

6. Universelle Vorrichtung (100, 200) zur Steuerung einer technischen Anlage (10-12, 20-22), welche dazu eingerichtet ist, einen Diversitäts-Indikators (101, 201) zu bestimmen, **dadurch gekennzeichnet, dass** von der Vorrichtung (100, 200) eine Vielzahl an Programmcodes (102, 202) für jeweils verschiedene Moden gespeichert sind und das Verfahren nach einem der vorhergehenden Ansprüche ausgeführt wird, wodurch der Diversitäts-Indikator (101, 201) bestimmt wird.

7. Vorrichtung (100, 200) nach dem vorhergehenden Anspruch, wobei die technische Anlage (10-12) eine industrielle Produktionsanlage ist.

8. Vorrichtung (100) nach einem der Ansprüche 6 oder 7, wobei die Vorrichtung (100) eine Steuervorrichtung zur Steuerung des Betriebs der technischen Anlage (10-12) ist, und die Vorrichtung (100) dazu eingerichtet ist, Steuerinstruktionen (150-152) mittels einem, durch einen Parameter (103) ausgewählten Programmcode aus der Vielzahl an Programmcodes (102, 202) zu erzeugen und dadurch die technischen Anlage (10-12) zu steuern.

9. Vorrichtung (200) nach einem der Ansprüche 6 oder 7, wobei die Vorrichtung (200) eine Erfassungsvorrichtung zur Erfassung von Betriebsparametern der technischen Anlage (20-22) ist, und die Vorrichtung (200) dazu eingerichtet ist, Steuerinstruktionen mittels einem, durch einen Parameter (203) ausgewählten Programmcode aus der Vielzahl an Programmcodes (102, 202) zu erzeugen und dadurch Daten (250-252) der technischen Anlage (20-22) zu erfassen.

10. System, umfassend eine mit einer Steuervorrichtung zur Steuerung des Betriebs der technischen Anlage nach Anspruch 8, sowie eine Erfassungsvorrichtung zur Erfassung von Betriebsparametern der technischen Anlage nach Anspruch 9 aufweist.

FIG 1

FIG 2

# FIG 3

400

410

420

430

440

# FIG 4

```
// compute similarity matrix from app features
Map<App, Map<App, Double>> similarity = new HashMap<App, Map<App, Double>>();

for (App a : apps) { // loop over all apps – outer loop
    for (App b : apps) { // loop over all apps – inner loop
        // next step get all app features that have been identified through LDA
        for (String fa : getAppFeatures(a)) {
            // check if a and b have feature fa in common
            if (getAppFeatures(b).contains(fa)) {
                // increment count for feature overlap indicating similarity
                similarity.get(a).put(b, /* increment by +1 */);

            }
        }
    }
}
// normalize similarity matrix
// note, the resulting adjacency matrix is not symmetric
for (App a: similarity.keySet()) {
    double numFeatures = similarity.get(a).get(a);
    for (App b : new HashSet<String>(similarity.get(a).keySet())) {
        double v = similarity.get(a).get(b);
        similarity.get(a).put(b, v / numFeatures);
    }
}
```

# FIG 5

# FIG 6

```
// computed distance (closeness) scores for each app
Map<String, Map<String, Double>> dist = new HashMap<String, Map<String, Double>>();
// unweighted shortest path algorithm for similarity graph g
UnweightedShortestPath<App, App> sp = new UnweightedShortestPath<App, App>(g);

for (App a : g.getVertices()) { // loop over all apps – outer loop
        for (App b : g.getVertices()) { // loop over all apps – inner loop
                // no need to compute distance if a == b
                if (a.equals(b)) {
                        dist.get(a).put(b, 0.0);
                } else {
                        // invoke shortest path computation for node pair a, b
                        Number d = sp.getDistance(a, b);
                        if (d != null) {
                                // we actually save the closeness between two nodes
                                // 1 means that a and b are directly connected (neighbors)
                                dist.get(a).put(b, 1 / d.doubleValue());
                        } else {
                                // there is no path from a to b
                                dist.get(u).put(v, 0.0);
                        }
                }
        }
}
// compute the sum of closeness values over all nodes
double sum = 0.0;
for (App a: dist.keySet()) {
        for (String b : dist.get(b).keySet()) {
                sum += dist.get(a).get(b);
        }
}
// number of nodes in g and apps in the marketplace respectively
double count =g.getVertexCount(g);
// the final diversity metric for the marketplace
double diversity = 1 – (1 / (count * (count - 1)) * sum);
```

## FIG 7

330

## FIG 8

340

EP 3 663 939 A1

**Europäisches Patentamt**
**European Patent Office**
**Office européen des brevets**

## EUROPÄISCHER RECHERCHENBERICHT

Nummer der Anmeldung

EP 18 21 0721

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2016/364473 A1 (FONTENOT NATHAN [US] ET AL) 15. Dezember 2016 (2016-12-15) <br> * Absatz [0022]; Abbildung 1 * <br> * Absatz [0025]; Abbildung 1 * <br> * Absatz [0030]; Abbildung 1 * <br> * Absatz [0040] - Absatz [0046]; Abbildung 2 * <br> ----- | 1-10 | INV. <br> G06F17/22 <br> G06F17/27 <br> G06F16/901 <br><br> ADD. <br> G05B19/05 |
| Y | US 2003/061311 A1 (LO GEORGE [US]) 27. März 2003 (2003-03-27) <br> * Absatz [0002] * <br> * Absatz [0046]; Abbildung 3 * <br> * Absatz [0057] - Absatz [0058]; Abbildung 3 und 12 * <br> * Absatz [0067] * <br> * Absatz [0079] - Absatz [0081]; Abbildung 23 * <br> ----- | 1-10 | |
| Y | US 2014/229161 A1 (GLIOZZO ALFIO M [US]) 14. August 2014 (2014-08-14) <br> * Absatz [0016] * <br> * Absatz [0021] - Absatz [0023]; Abbildung 1 * <br> ----- | 2,3 | |

RECHERCHIERTE SACHGEBIETE (IPC)

G06F
G05B

Der vorliegende Recherchenbericht wurde für alle Patentansprüche erstellt

| Recherchenort | Abschlußdatum der Recherche | Prüfer |
|---|---|---|
| München | 31. Mai 2019 | Bernard, Eddy |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

13

**ANHANG ZUM EUROPÄISCHEN RECHERCHENBERICHT
ÜBER DIE EUROPÄISCHE PATENTANMELDUNG NR.**

EP 18 21 0721

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-05-2019

| Im Recherchenbericht angeführtes Patentdokument | Datum der Veröffentlichung | Mitglied(er) der Patentfamilie | Datum der Veröffentlichung |
|---|---|---|---|
| US 2016364473 A1 | 15-12-2016 | US 9378242 B1 | 28-06-2016 |
| | | US 2016364473 A1 | 15-12-2016 |
| | | US 2017046250 A1 | 16-02-2017 |
| | | US 2017344604 A1 | 30-11-2017 |
| | | US 2018365287 A1 | 20-12-2018 |
| US 2003061311 A1 | 27-03-2003 | CN 1556963 A | 22-12-2004 |
| | | CN 101388101 A | 18-03-2009 |
| | | EP 1435074 A2 | 07-07-2004 |
| | | US 2003061311 A1 | 27-03-2003 |
| | | US 2005108693 A1 | 19-05-2005 |
| | | US 2005144600 A1 | 30-06-2005 |
| | | US 2005144601 A1 | 30-06-2005 |
| | | WO 03027972 A2 | 03-04-2003 |
| US 2014229161 A1 | 14-08-2014 | US 2014229161 A1 | 14-08-2014 |
| | | US 2014229163 A1 | 14-08-2014 |
| | | WO 2014126657 A1 | 21-08-2014 |

EPO FORM P0461

Für nähere Einzelheiten zu diesem Anhang : siehe Amtsblatt des Europäischen Patentamts, Nr.12/82